# EUROPÄISCHE PATENTANMELDUNG

(11) **EP 1 275 604 A2**
(43) Veröffentlichungstag der Anmeldung: **15.01.2003**
(21) Anmeldenummer: 02405601.2
(22) Anmeldetag: 12.07.2002
(51) Int. Cl.: B65G 59/10

(54) **Vorrichtung und Verfahren zum Abstapeln von Blisterverpackungen**

(30) Priorität: 13.07.2001 CH 20011295; 10.12.2001 CH 20012253
(71) Anmelder: Zellwag AG, 8317 Tagelswangen (CH)
(72) Erfinder: Wohnlich, Peter, 8475 Ossingen (CH); Locher, Peter, 8192 Glattfelden (CH)
(74) Vertreter: Patentanwälte Feldmann & Partner AG

(57) **Zusammenfassung**

Es wird eine Vorrichtung und ein Verfahren zum Abstapeln von Blistern (B) mit einem Magazin, einem Greifmittel (3), einer Mehrzahl oberer Rückhaltemittel (4) zum Zurückhalten eines oberen Teils eines darin befindlichen Blisterstapels und einer Mehrzahl unterer Rückhaltemittel (5), vorgeschlagen. Die unteren Rückhaltemittel umfassen (5) jeweils mindestens ein starres Rückhalteelement (50) und ein in Abstapelrichtung unterhalb des starren Rückhalteelements (50) angeordnetes flexibles Rückhalteelement (52), wobei zumindest das starre Rückhalteelement (50) zwischen einer Rückhaltestellung und einer Freigabestellung beweglich direkt oder indirekt am Magazin angeordnet ist.

## Beschreibung

Die vorliegende Erfindung betrifft eine Vorrichtung und ein Verfahren zum Entstapeln oder Abstapeln von Produktekonfektionen oder Blistern nach den Oberbegriffen der Patentansprüche 1 und 15.

Nachstehend werden verschiedene Produktekonfektionen mit "Blister" bezeichnet werden. Blister werden üblicherweise mit Blistermaschinen aus Kunststoffmaterial hergestellt und bestehen aus einer Folie, die mit einer Anzahl von Vertiefungen zur Aufnahme der zu verpackenden Produkte versehen ist. Blister werden unter anderem häufig zur Aufnahme von empfindlichen oder leicht zerbrechlichen Bäckerei- und Confiseriewaren, wie Waffeln, Keksen oder Pralinen, oder auch von pharmazeutischen oder elektrotechnischen Produkten eingesetzt.

Gerade im pharmazeutischen Bereich werden die Vertiefungen der Kunststoffblister nach dem Befüllen verschlossen, indem man die Bilsteroberfläche mit einer einseitig lackbeschichteten Aluminiumfolie verschweisst.

Im Lebensmittelbereich werden die Blister oft in Kartonschachteln verpackt, oder mit Folienschläuchen umhüllt.

Form und Grösse der Blister sowie die Anzahl, Form und Grösse der Blister variieren stark in Abhängigkeit von der Form, Grösse und Beschaffenheit des abzupackenden Produktes. Üblicherweise sind die Blister annähernd rechteckig, sie können aber auch drei- oder mehreckig, rund, oval oder sogar herzförmig sein. Allen Blistern gemeinsam ist jedoch das Merkmal, dass sie ineinander stapelbar sind und ein umlaufend überstehender Randbereich annähernd eine Ebene definiert. Bei Blistern mit mehreren Vertiefungen liegen üblicherweise die Bodenflächen zumindest einiger dieser Vertiefungen ebenfalls mehr oder weniger in einer Ebene.

Wenn im folgenden von Blistern gesprochen wird, so umfasst dies auch Produktekonfektionen aus anderen Materialien, wie zum Beispiel Aluminiumfolie oder beschichtetem oder unbeschichtetem Karton. Bei allen Materialien wird aus Gewichts- und Kostengründen versucht, die Blister mit einem Minimum an Material herzustellen; daher sind die Wandstärken der Blister möglichst dünn gehalten, was sich auf die Formstabilität und Steifheit der Blister natürlich nachteilig auswirkt. In den dargestellten Figuren soll zur Vereinfachung der Illustrationen jeweils ein Blister mit nur einer Vertiefung, also eine einfache Schale dargestellt werden.

Die Blister werden in Stapeln geliefert und müssen vor dem Einspeisen in eine Abpackanlage erst vereinzelt oder abgestapelt werden.

Zur Durchführung dieses Arbeitsschrittes sind verschiedene Vorrichtungen bekannt.

In den Patentpublikationen US-A-5'064'093, US-A-5'876'180 und US-A-6'099'239 sind Vorrichtungen zum Abstapeln und

Separieren von senkrechten Stapeln von Produktekonfektionen beschrieben.

Den oben genannten Vorrichtungen zum Abstapeln und Separieren von Blistern ist gemeinsam, dass es bei ihrem Betrieb regelmässig zu Unterbrechungen kommt. Dies hat verschiedene Ursachen. Es kommt vor, dass stark aneinander haftende Blister nicht getrennt werden, oder dass die Blister von den Rückhaltemitteln beschädigt werden. Oft kommt es auch zu einem, von den Rückhaltemitteln verursachten, Verkanten und

Verklemmen der Blister in der Vorrichtung.

Die vorliegende Erfindung stellt sich daher die Aufgabe, eine Vorrichtung und ein Verfahren zum Abstapeln und Separieren von Produktekonfektionen oder Blistern zur Verfügung zu stellen, welche die genannten Nachteile nicht aufweisen.

Weitere Ausführungsvarianten ergeben sich aus den abhängigen Ansprüchen.

In den Zeichnungen ist ein Ausführungsbeispiel des Erfindungsgegenstandes dargestellt und in der nachfolgenden Beschreibung erläutert. Es zeigt:
- Figur 1: eine Seitenansicht einer Ausführungsform der Erfindung, wobei das Magazin nicht in seiner vollen Höhe und der tragende Rahmen strichliniert dargestellt ist;
- Figur 2: eine Draufsicht auf die Vorrichtung gemäss Figur 1 angepasst auf eine kleinste und eine grösste Blistergrösse, wobei die Stellung für die grössten Blister mit durchgezogenen Linien und die Stellung für die kleinsten Blister strichliniert dargestellt ist;
- Figur 2a: eine Ausschnittsvergrösserung des rechten vorderen Magazinprofils mit Rückhaltemitteln gemäss Figur 2;
- Figur 3: eine Frontalsicht auf die Vorrichtung gemäss Figur 1;
- Figur 3a: eine Düsenplatte mit Schlitzdüse gemäss einer weiteren Ausführungsform der Erfindung;
- Figur 4a: eine Seitenansicht eines unteren Rückhaltemittels;
- Figur 4b: eine Seitenansicht eines unteren Rückhaltemittels gemäss einer weiteren Ausführungsform der Erfindung, wobei lediglich Messer, Bürste und Halterung gezeigt sind;
- Figur 4c: eine Sicht von oben auf das Rückhaltemittel gemäss Figur 4b; und
- Figur 5a: bis 5f einen stark schematisierten schrittweisen Ablauf einer Version des erfindungsgemässen Abstapel-verfahrens.
- Figuren 6a: bis 6d zeigen ein oberes Rückhaltemittel gemäss einer Ausgestaltungsform der vorliegenden Erfindung.

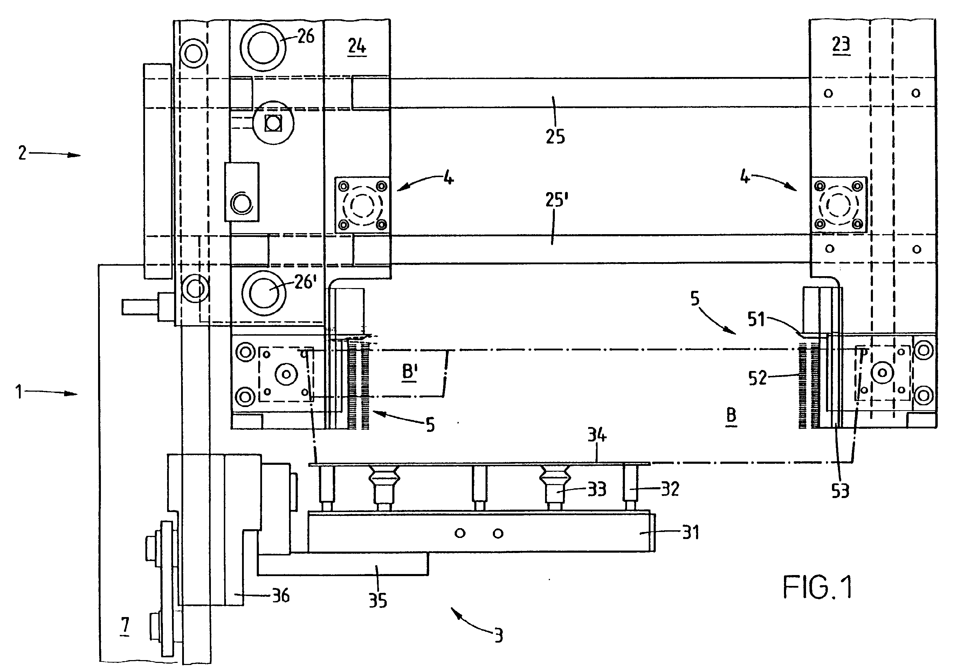

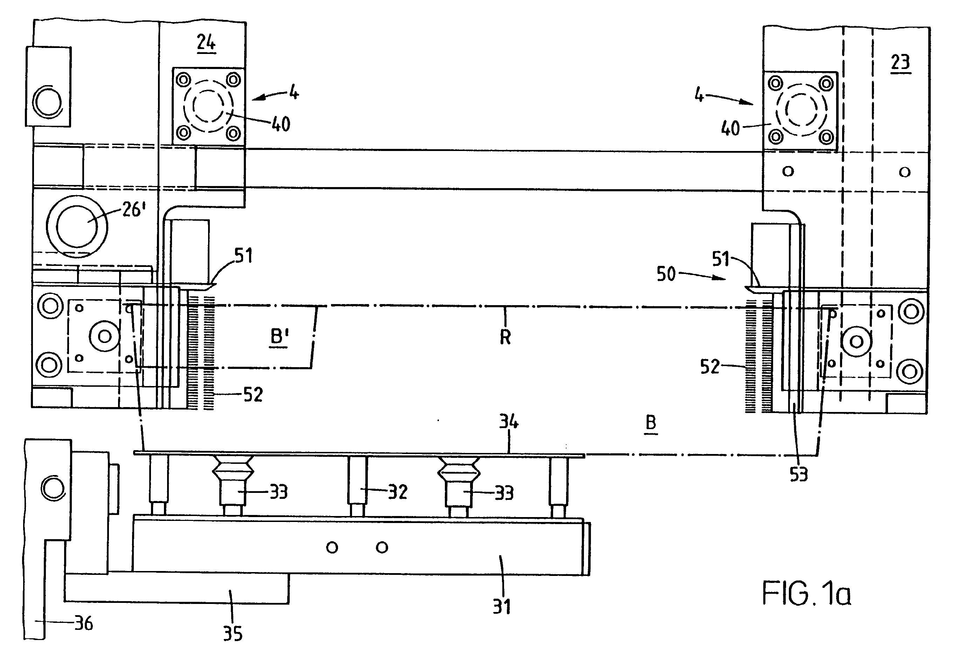

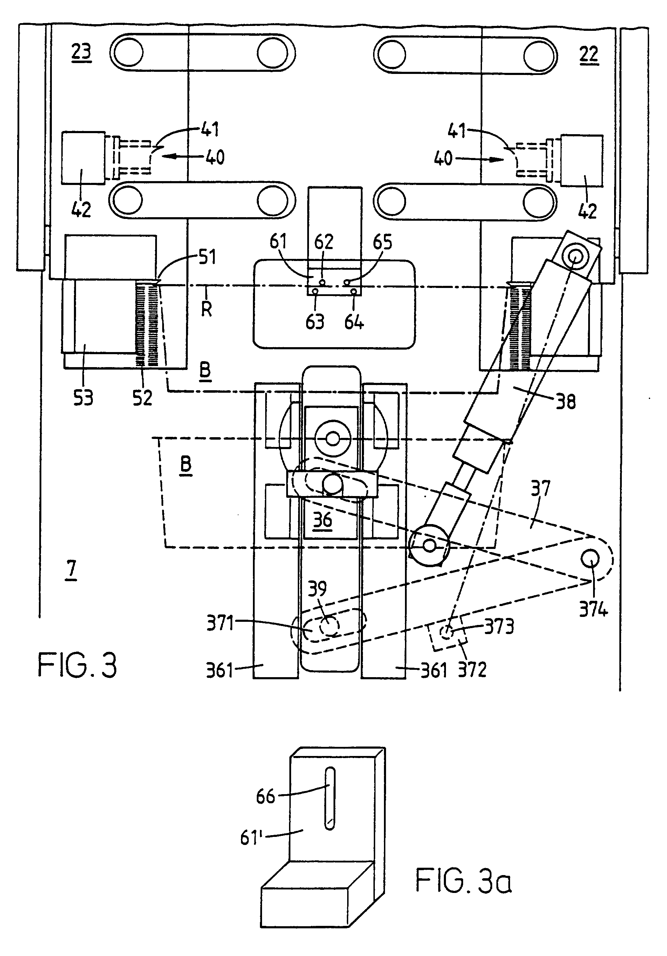

Die Abstapelvorrichtung wie sie in den Figuren 1 und 1a dargestellt ist dient zum Abstapeln und Vereinzeln von annähernd rechteckigen Blistern B, B'. Mit der dargestellten Vorrichtung lassen sich Blister verschiedenster Grössen abstapeln und vereinzeln. Um dies anzudeuten ist ein Blister maximaler Grösse B und ein Blister mit minimaler Grösse B' in der Figur strichliniert dargestellt. Der Blister B liegt in der in den Figuren 1 und 1a gezeigten Arbeitsposition mit seinem planen Boden auf einer Tragplatte 34 eines Greifmittels 3 auf. In die Tragplatte integriert sind eine Mehrzahl von Saugnäpfen 33, welche in Position und Anzahl auf die Beschaffenheit der Blisterunterseite der zu verpackenden Blister angepasst sind. Die Tragplatte 34 wird von federkraftbeaufschlagten Distanzhaltern 32 beabstandet von einer Greiferplatte 31 gehalten. Greiferplatte 31 und Tragplatte 34 sind jeweils horizontal und annähernd parallel zueinander angeordnet. Über einen Arm 35 ist die Greiferplatte 34 und damit auch die federnd über ihr gelagerte Tragplatte mit einem vertikal auf- und abbeweglichen Schlitten 36 verbunden. Die lineare Auf- und Abbewegung des Schlittens 36 ist exakt begrenzbar. Dadurch kann für die Tragplatte 34 eine obere Uebernahme- oder Abnahmeposition und eine untere Uebergabe- oder Abgabepositon eingestellt werden. Wie im Weiteren noch verdeutlicht wird, wird die obere Endposition in Abhängigkeit von der Blisterhöhe in Relation zu den unteren Rückhaltemitteln gewählt. Die untere Übergabeposition wird auf die Vorrichtungen zum Weitertransport der vereinzelten Blister angepasst. Weglänge und Lage beider Endpositionen können stufenlos verstellt werden. Wie in der Figur 3 gezeigt ist, ist der Schlitten 36 zwischen zwei Schienen 361 geführt. Die Schienen 361 geben die lineare Bewegungsrichtung des Schlittens vor. Am Schlitten 36 greift ein Hebelarm 37 an. Der Hebelarm ist am schlittenseitigen Ende mit einem Langloch 371 versehen, in das ein Bolzen 39, der am Schlitten befestigt ist, eingreift. Am gegenseitigen Ende ist der Hebelarm 37 an einer fixen Schwenkachse 374 gelagert. Etwa in der Mitte des Hebelarmes greift ein vorzugsweise pneumatisch betriebener doppelwirkender Hubzylinder an, welcher den Hebelarm 37 und damit den Schlitten 36 auf- und abbewegt. Die Endpositionen können sehr einfach durch Anschläge in den Schienen 361 begrenzt und vorgegeben werden. Der Antrieb des Schlittens 36 könnte über Spindeln oder direkt über lineare Schrittmotoren erfolgen. Die anzufahrenden Endpositionen würden dann lediglich in einer Steuereinheit festgelegt.

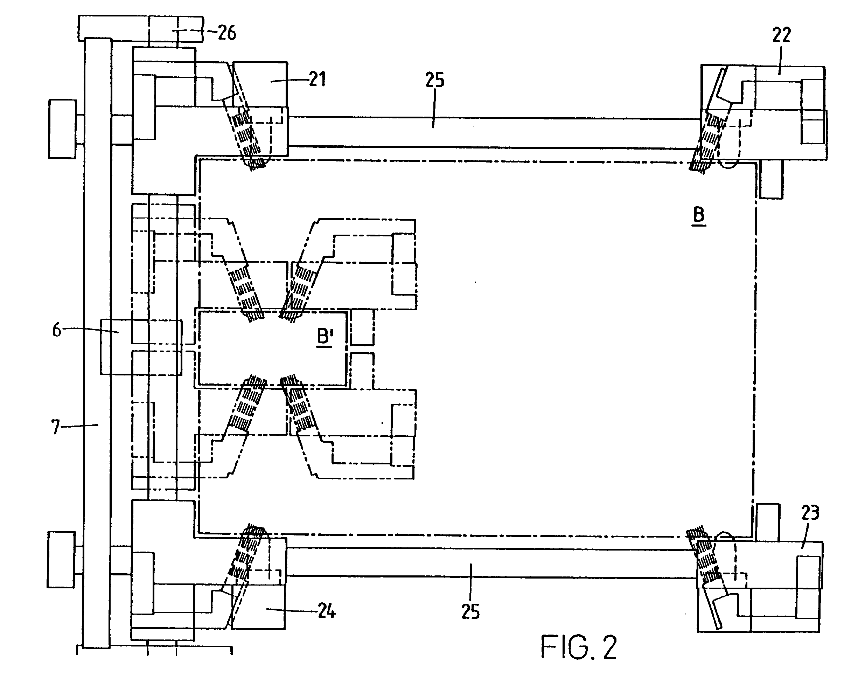

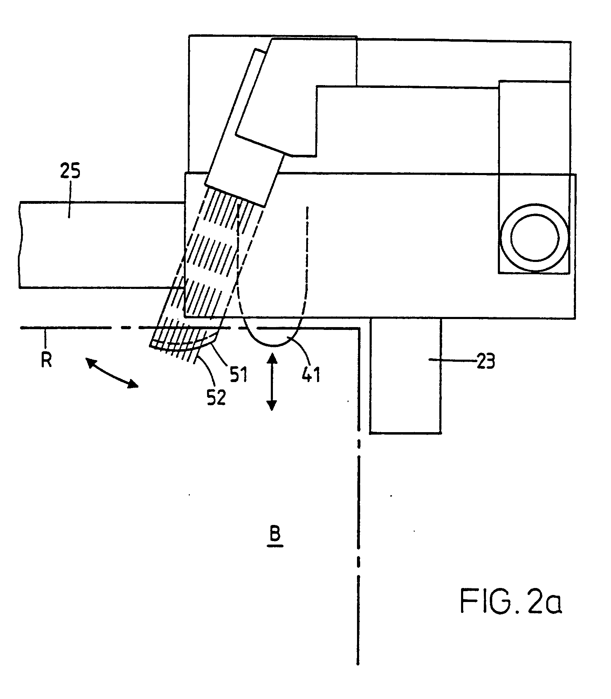

Greifmittel 3 und die darüberliegenden Rückhalte- 4,5 und Separiermittel 6, sowie das Magazin 2 sind in den in den Figuren 1 und 1a dargestellten Ausführungsbeispielen alle direkt oder indirekt an einem Tragrahmen 7 befestigt. Das Magazin 2 umfasst im Wesentlichen zwei Paare von vertikalen Winkel- oder Eckprofilen 21-24, die verschiebbeweglich zueinander fixierbar sind. Um die erfindungsgemässe Vorrichtung schnell und einfach auf verschiedene Blistergrössen anpassen zu können, sind die vorderen Winkelprofile 22, 23 mittels je eines Paars von seitlichen Horizontalstreben 25, 25' mit den zugehörigen hinteren Winkelprofilen 21, 24 verbunden. Diese werden wiederum von den hinteren Streben 26, 26' getragen. Wie die Verschiebbarkeit der Winkelprofile 21-24 die Anpassung des Magazins an verschiedene Blistergrössen ermöglicht, ist in der Figur 2 dargestellt. In bekannte Weise werden die Winkelprofile so zueinander positioniert, dass sie einen rechteckigen Schacht definieren, welcher etwas grösser bemessen ist als Aussenmasse des Stapels von annähernd rechteckigen Blistern. Die Blister werden also im Magazin gut geführt, haben aber etwas Luft um ein Verklemmen oder Verkanten zu vermeiden.

In dem Ausführungsbeispiel der Figuren 1 bis 3 sind die oberen und unteren Rückhaltemittel 4,5 in die Winkelprofile integriert, respektive an diesen befestigt. Die Separiermittel 6 sind mittig zwischen den hinteren Winkelprofilen 21, 24 an den hinteren Streben 26 befestigt.

In jedem Winkelprofil ist je ein oberes Rückhaltemittel 4 angeordnet. Die oberen Rückhaltemittel 4 umfassen je ein hinund herbewegliches Messer 40, dessen Klinge 41 mittels eines, vorzugsweise pneumatischen, linearen Schubzylinders 42 zwischen einer vorderen Rückhalteposition und einer hinteren Freigabeposition bewegt werden kann. Die Klingen 41 sind so geformt, dass sie problemlos zwischen die Randbereiche der gestapelten Blister eingreifen können und diese falls nötig schon leicht auseinander drücken können. In der dargestellten Vorrichtung greifen je zwei Klingen 41 an den Längsseiten in den Blisterstapel ein. Die Klingen liegen alle in einer Ebene, so dass sie in ihrer Rückhalteposition alle unter den Rand des selben Blisters eingeführt sind. Die Klingen 41 greifen so weit genug unter den Blisterrand R, dass auch ein hoher und damit schwerer Blisterstapel ausreichend gestützt werden kann und der Stapel nicht durchbricht. Die Luftversorgung der Schubzylinder 42 ist ebenso wie die zugehörige Steuereinheit nicht in den Figuren dargestellt. Die Rückhaltemittel sind im dargestellten Beispiel in die Magazinprofile integriert, dadurch wird auf einfachste Weise erreicht, dass beim Umrüsten auf eine andere Blistergrösse, die Rückhaltemittel nicht separat versetzt werden müssen. Falls es die Gestaltung des Blisters jedoch erfordert, dass die Rückhaltemittel beabstandet vom Eckbereich den Blisterrand untergreifen, so können die Rückhaltemittel auch an beliebigen anderen Punkten entlang der Blisterperipherie positioniert werden. Zum Befestigen der Rückhaltemittel können zum Beispiel die Streben 25, 26 dienen. Wichtig für die Funktion der Vorrichtung ist, dass die Rückhaltemittel 4 synchron geöffnet, d.h. in die Freigabepostion bringbar, und ebenso synchron wieder geschlossen werden können, d.h. in die Rückhalteposition bringbar sind.

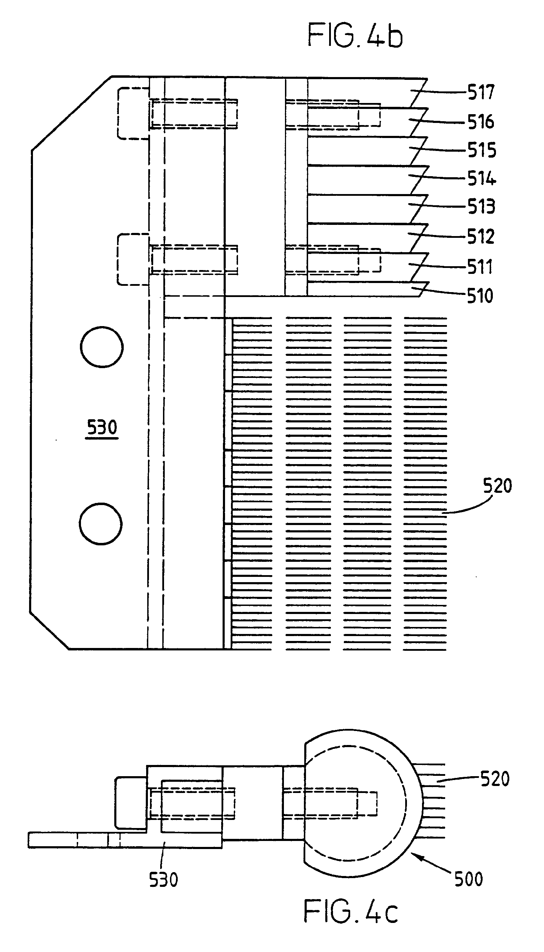

Unterhalb der oberen Rückhaltemittel 4 sind die unteren Rückhaltemittel 5 an den unteren Enden der Winkelprofile 21-24 angeordnet. Diese Rückhaltemittel 5 umfassen je ein unteres Messer 50 und eine längliche Bürste 52, welche sich vertikal unterhalb des Messers 50 erstreckt. Während in den Figuren 1 bis 3 und 4a ein unteres Rückhaltemittel mit einer einzigen Klinge 51 dargestellt ist, zeigen die Figuren 4b und 4c eine Variante mit einem Messer 500 mit einer Mehrzahl von übereinander angeordneten Klingen 510. Im Beispiel der Figuren 4b und 4c sind die Dicken der Klingen 510 bis 517, respektive die vertikalen Abstände der Schneiden so dimensioniert, dass sie in etwa mit den Abständen zwischen den Rändern im Blisterstapel korrespondieren.

Bürste 52, 520 und Messer 50, 500 sind jeweils in einem Halter 53, 530 lösbar befestigbar. Der Halter 53, 530 ist schwenkbeweglich am Winkelprofil 21-24 angeordnet und kann mittels eines nicht im Detail dargestellten pneumatisch betriebenen Zylinders zwischen einer Rückhalteposition und einer Freigabeposition hin- und hergeschwenkt werden kann. Die Schwenkachse verläuft in vertikaler Richtung, also parallel zur vertikalen Ausrichtung des Blisterstapels. Die Klingen 51, 510 bis 517 sind analog zu den Klingen 41 so geformt, dass sie problemlos zwischen die Randbereiche der gestapelten Blister eingreifen können. In der in der Figur 3 dargestellten Vorrichtung greifen je zwei Klingen 51 an jeder Längsseite in den Blisterstapel ein. Die Messer 50 der Ausführungsform gemäss der Figuren 1 bis 3 liegen alle in einer Ebene, so dass sie in ihrer Rückhalteposition alle unter den Rand des selben Blisters eingeführt sind. Die Klingen 51 greifen weit genug unter den Blisterrand, so dass auch ein hoher und damit schwerer Blisterstapel ausreichend gestützt werden kann. Dies ist nötig, damit der Blisterstapel, welcher bei geöffneten oberen Rückhaltemitteln komplett auf den unteren Messern lastet, nicht durchbricht. Wie bereits erwähnt, sind auch die unteren Rückhaltemittel im dargestellten Beispiel in die Magazinprofile integriert. Beim Umrüsten müssen also weder die oberen, noch die unteren Rückhaltemittel separat versetzt werden. Falls es die Gestaltung des Blisters jedoch erfordert, dass die Rückhaltemittel beabstandet vom Eckbereich den Blisterrand untergreifen, so können die Rückhaltemittel auch an beliebigen anderen Punkten entlang der Blisterperipherie R positioniert werden. Zum Befestigen der Rückhaltemittel können zum Beispiel die Streben 25, 26 dienen. Wichtig für die Funktion der Vorrichtung ist, dass die Rückhaltemittel 5 synchron geöffnet, d.h. in die Freigabepostion bringbar, und ebenso synchron wieder geschlossen werden können, d.h. in die Rückhalteposition bringbar sind.

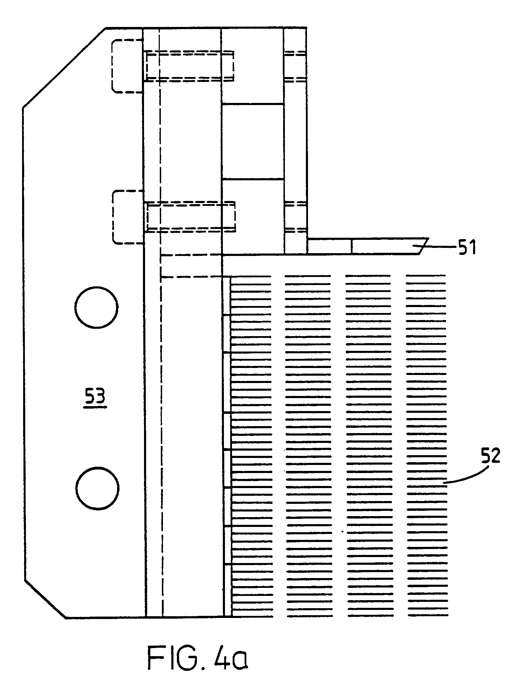

Die Figuren 2a und 4 zeigen zwei unterschiedlich gestaltete Messervarianten.

Beiden Varianten ist jedoch gemeinsam, dass der Bürstensaum 52, 520 zumindest teilweise die Messer in horizontaler Richtung überragt. Die Schwenkbewegung der unteren Rückhaltemittel ist derart begrenzt, dass in der geöffneten Position zwar die Klingen 51, 510 der Messer 50, 500 vollständig aus dem Blisterstapel herausbewegt sind, die darunterliegenden Bürsten aber noch teilweise unter dem Blisterrand liegen können.

Das Separiermittel 6 umfasst eine vertikal stehende Düsenplatte 61 mit vier jeweils paarweise in zwei Ebenen angeordneten Düsenpaaren 62-65. Die Düsenplatte ist in der gezeigten Ausführungsform der Figuren 2 und 3 parallel zur hinteren Stirnseite des Blisterstapels mittig zwischen den hinteren Winkelprofilen 21, 24 angeordnet. In weiteren, in den Figuren nicht dargestellten Ausführungsformen umfasst das Separiermittel vier Düsenplatten oder Düsenpaare, welche je in einem Winkelprofil oder sogar in den unteren Separiermittel integriert sind. Wesentlich ist, dass die Düsenpaare 62, 63 und 64, 65 jeweils in einer oberen und einer unteren Ebene angeordnet sind. Beim schnellen Abziehen des untersten Blisters vom Stapel nach unten entsteht zwischen dem untersten und dem nächsten darüberliegenden Blister ein Unterdruck. Dieser Unterdruck führt dazu, dass der zweit-unterste Blister im Stapel beim Separieren in unerwünschter Weise mit nach unten gerissen werden kann. Das gezielte Einblasen von Separierluft zwischen den untersten und den zweit-untersten Blister wirkt der Entstehung des Unterdruckes entgegen. Beim Abstaplen muss daher nur noch der mechanische Widerstand der allfällig aneinander haftenden Blister überwunden werden. Die Position der oberen Separierluftdüsen 62 und 65 ist daher so gewählt, dass sie knapp unterhalb der untersten Klingen 51 in einer horizontalen Ebene liegen. Idealerweise sind sie in Abhängigkeit von der Blisterhöhe und der oberen Übernahmeposition der Tragplatte 34 so positioniert, dass der Randbereich des untersten Blisters in Abnahmestellung angeblasen wird. Dies gilt natürlich für Düsen, die so ausgerichtet sind, dass die abgegebenen Luftstrahlen annähernd eine horizontalen Ebene definieren. Falls die Düsen nicht horizontal sondern zum Beispiel schräg nach unten abblasen, so können die Düsen entsprechend höher am Magazin positioniert sein. Entscheidend ist, dass, wie bereits oben erwähnt, die Separierluft hauptsächlich zwischen unterstem und zweit unterstem Blister eingeblasen wird. Das untere Düsenpaar 63, 64 ist zwischen 5 bis 15 mm, vorzugsweise etwa 8 bis 10 mm unterhalb des oberen Düsenpaares 62, 65 angeordnet, so dass während der Abwärtsbewegung noch eine zweite Portion Separierluft zwischen den untersten und den zweit-untersten Blister eingeblasen werden kann, und dadurch die Separierwirkung unterstützt wird. Anstelle der oben beschriebenen untereinander angeordneten Düsen wird in einer weiteren vorteilhaften Ausführungsform der vorliegenden Erfindung eine einzelne länglich schlitzförmige Düse, wie sie in der Figur 3a dargestellt ist verwendet. Der Schlitz 66 ist vertikal im Zentrum der Düsenplatte 61' angeordnet, welche wiederum zentrisch an der Abstapelvorrichtung angeordnet ist, so dass die abzustapelnden Blister mittig angeblasen werden können. Die Länge des Schlitzes beträgt zwischen 5 und 15 mm, vorzugsweise 8 bis 10 mm.

In der Figur 1a ist ein Blister B strichliniert in Übernahmeposition dargestellt. Der Blister liegt mit einem Teil der Bodenfläche auf der Tragplatte 34 auf und wird zusätzlich von den Bürstensäumen 52 in der horizontalen Stellung gehalten. Der vertikale Abstand zwischen Tragplatte 34 und den unteren Klingen 51 ist zwingend grösser als die Höhe der abzustapelnden Blister B. Der obere Rand R des untersten Blisters muss in der Übernahmeposition unterhalb der unteren Klingen 51 zu liegen kommen. Beim Wegziehen nach unten muss der Blister also nur den Widerstand der Bürsten überwinden.

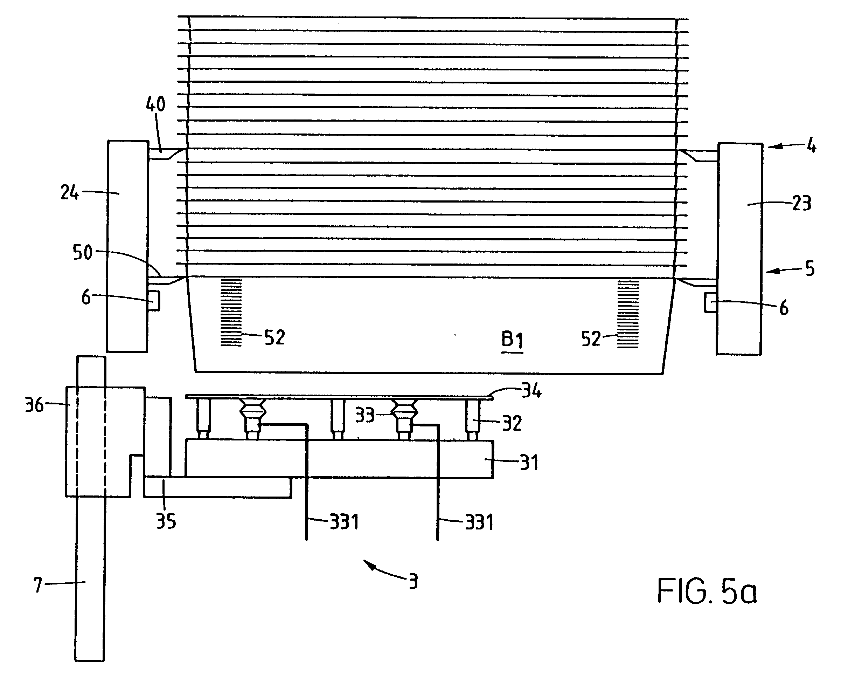

Die Funktionsweise der neuen Abstapelvorrichtung und das neue Abstapelverfahren soll nun anhand der Figuren 5a bis 5f erläutert werden.

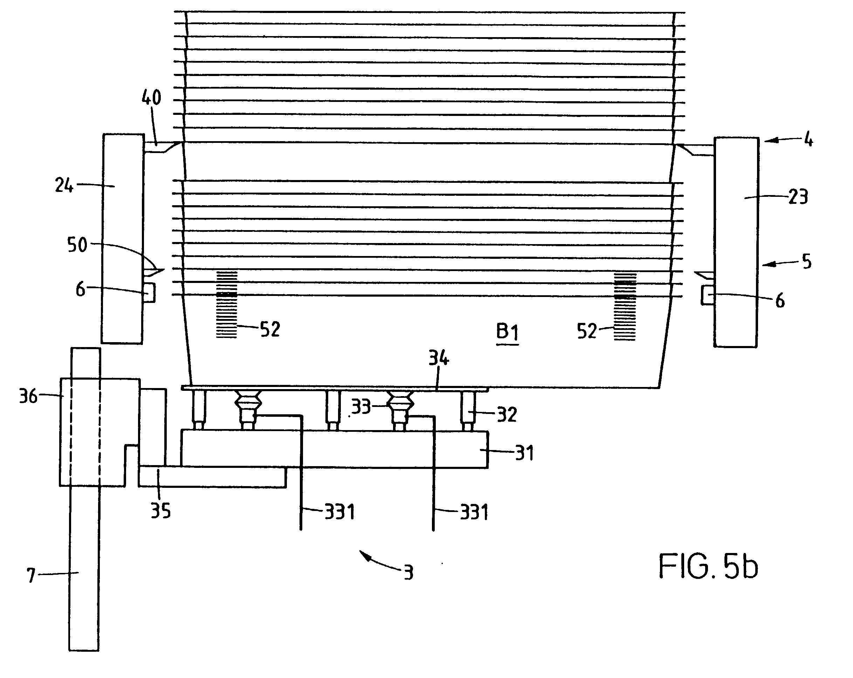

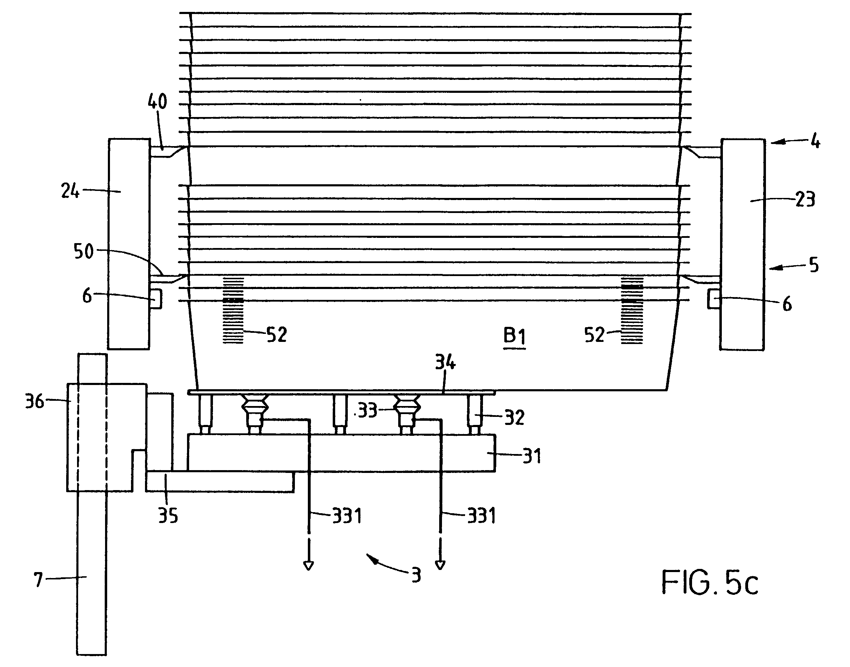

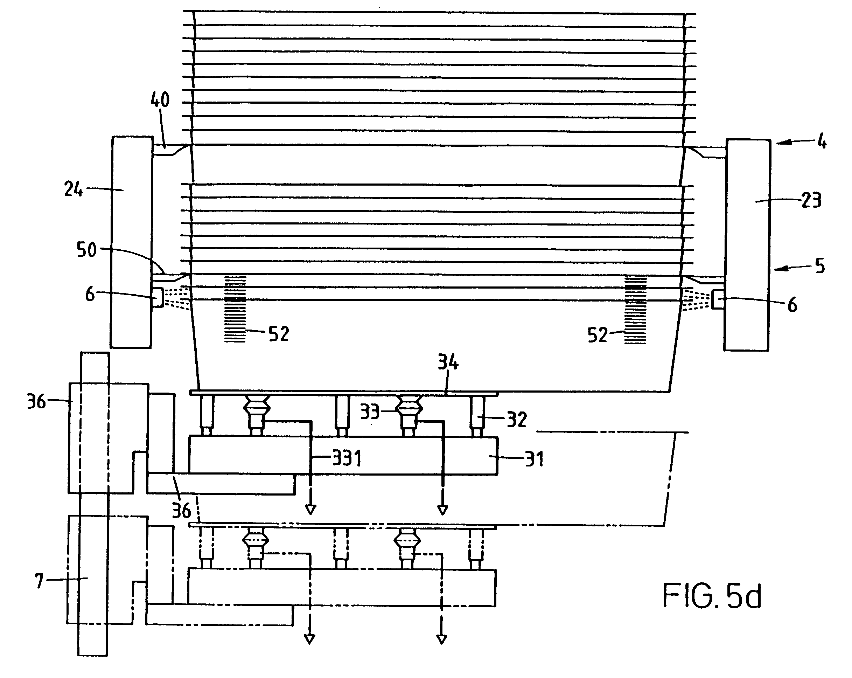

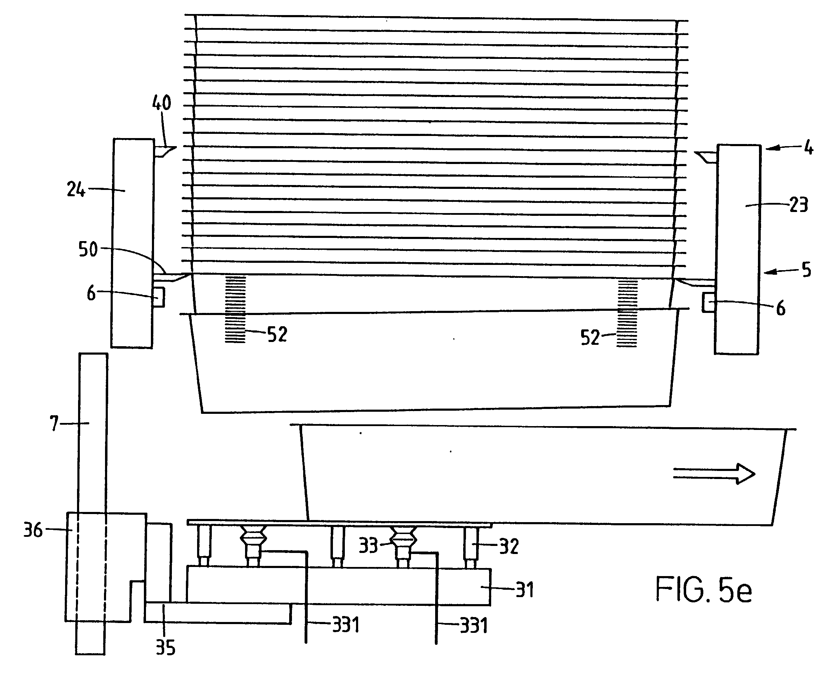

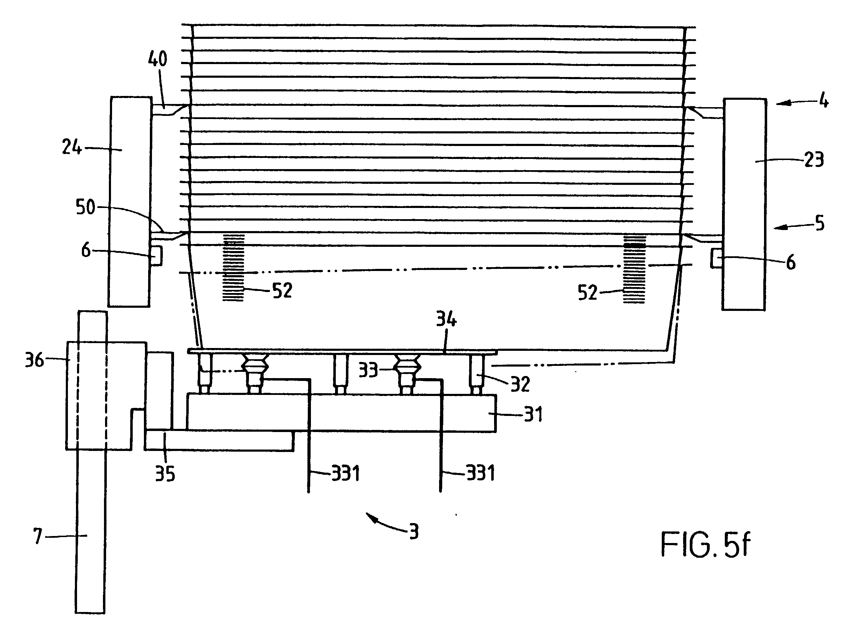

Die Figur 5a zeigt die Abstapelvorrichtung in Übernahmestellung eines ersten Abstapelzyklus. Das Greifmittel 3 befindet sich in der oberen Abnahme/Übernahmeposition und die Freigabe-/Rückhaltemittel oben 4 und unten 5 befinden sich in den geschlossenen oder Rückhaltepositionen. Im Magazin über dem oberen Freigabemittel 4 befinden sich eine Vielzahl von Blistern (n=x). Im Magazinbereich zwischen oberem und unterem Freigabemittel befinden sich 10 (y=10) Blister. Im Bürstenbereich befinden sich keine Blister. Die an den Saugnäpfen 33 anliegende Saugluft 331 ist ausgeschaltet. Die Separierluft der Separiermittel 6 ist ebenfalls ausgeschaltet. Im dargestellten Ausführungsbeispiel der Figur 5 greifen die oberen und die unteren Messer 40, 50 jeweils in die Stirnseiten des Blisterstapels ein, während die Bürsten 52 getrennt von den Messern 50 an der Längsseite des Blisterstapels angeordnet sind. Im Gegensatz zu den bisher beschriebenen Vorrichtungen sind die Messer 50 der unteren Rückhaltemittel in der gezeigten Ausführungsform nicht schwenkbeweglich, sondern linear hin und herbeweglich. Die Bürsten 52 können linear oder schwenkbeweglich angeordnet sein. In einer weiteren Ausführungsform sind die Bürsten unbeweglich und verbleiben während des gesamten Zyklus in derselben Position.

In der Figur 5b ist das Greifmittel 3 weiterhin in der oberen Abnahmeposition, und die oberen Freigabemittel 4 sind geschlossen, respektive in der Rückhalteposition. Die unteren Freigabemittel 5 hingegen sind nun in der offenen oder Freigabeposition. Da die Messer 50 zurückgezogen sind, kann der Blisterstapel unterhalb der oberen Rückhaltemittel 4 bis auf die Tragplatte 34 nach unten rutschen. Die Anzahl der Blister im Magazin über dem oberen Freigabemittel 4 ist unverändert (n=x), die oberen Messer 50 verhindern dass dieser Anteil des Blisterstapels nach unten rutschen kann. Die Blister im Magazin unter dem oberen Freigabemittel lasten alle auf der Tragplatte 34 des Greifmittels 3.

In der Figur 5c ist gezeigt, wie die unteren Rückhaltemittel wieder in ihre geschlossene oder Rückhalteposition bewegt sind. Die Messer unten 50 greifen so in den Blisterstapel ein, so dass zwei Blister unterhalb der unteren Messer 50 im Bürstenbereich zu liegen kommen. Im Magazinbereich zwischen oberem und unterem Freigabemittel befinden sich nur noch acht Blister (y-2). Die Anzahl der Blister im Magazin über dem oberen Freigabemittel 4 ist unverändert (n=x). Die Saugluft 331 ist angestellt, und der unterste Blister wird mittels der Saugnäpfe angesaugt und gegen die Tragplatte 34 gezogen. Die Separierluft ist immer noch ausgeschaltet.

In der Figur 5d ist die Abwärtsbewegung des Greifmittels 3 mit dem untersten Blister B₁ dargestellt. Die Saugluft ist an, so dass der unterste Blister von den Saugnäpfen 33 an der Tragplatte 34 gehalten wird. Nur der unterste Blister B₁ wird abgezogen. Die restlichen Blister im Bürstenbereich werden von den Bürsten 52 zurückgehalten. Kurz vor Beginn der Abwärtsbewegung des Greifmittels 3 wird die Separierluft angeschaltet. Die Separierluft bleibt für etwa 10mm des Abwärtsweges des Greifmittels 3 angeschaltet und wird danach abgestellt. Wie bereits erwähnt, sind die Separierluftdüsen so angeordnet, dass Separierluft nur knapp oberhalb und knapp unterhalb des Randes des untersten Blisters B₁ eingeblasen wird. In der Figur 5e befinden sich Greifmittel 3 und Blister B₁ in der unteren Übergabe-/Abgabeposition. Der Blister B₁ wird zum Befüllen in eine nachgeschaltete Förder- oder Befüllvorrichtung in horizontaler Richtung abgegeben. Die Saugluft ist dazu natürlich abgeschaltet, das heisst, der Blister B1 steht auf der Tragplatte 34 und wird von den Saugnäpfen 33 nicht mehr angesaugt. Die Separierluft ist ebenfalls aus.

Die oberen Freigabemittel 4 sind geöffnet in Freigabeposition, wodurch der Blisterstapel im Magazin über dem oberen Freigabemittel 4 nach unten rutschen kann. Die Anzahl der Blister im Magazin über dem oberen Freigabemittel 4 nimmt um 2 ab (n=x-2). Im Magazinbereich zwischen oberem und unterem Freigabemittel befinden sich nun wieder 10 Blister. Im Bürstenbereich wird ein Blister B₂ von den Bürsten 52 gehalten.

In der Figur 5f ist das Greifmittel 3 wieder nach oben gefahren und die Freigabemittel oben 4 sind geschlossen. Strichliniert ist der neue unterste Blister B₂ in einer Schräglage angedeutet. Durch die Aufwärtsbewegung der Tragplatte 34 wird ein solcher schrägstehender Blister im Bürstenbereich ausgerichtet und automatisch in die korrekte Übernahmepostion ausgerichtet. Mit dem Erreichen der oberen Übernahmepostion durch das Greifmittel 3 ist der erste Abstapelzyklus beendet. Im anschliessenden zweiten Zyklus wird der neue unterste Blister B₂ abgestapelt. Im ersten Schritt des zweiten Zyklus würden die unteren Rückhaltemittel 5 geöffnet, wie dies in der Figur 5b dargestellt ist. Da die Messer 50 zurückgezogen sind, kann der Blisterstapel unterhalb der oberen Rückhaltemittel 4 bis in den Blister B₂ nach unten rutschen, der bereits auf der Tragplatte 34 aufliegt. Die Anzahl der Blister im Magazin über dem oberen Freigabemittel 4 ist unverändert (n=x-2). Elf Blister im Magazin unter dem oberen Freigabemittel 4 lasten auf der Tragplatte 34 des Greifmittels 3.

Der schrittweise Ablauf einer bevorzugten Ausführungsform des erfindungsgemässen Verfahrens ist im Folgenden aufgelistet:

### 1. Schritt:

a) Greifmittel in oberer Abnahme-/Übernahmeposition
b₁) b₂) Freigabe/Rückhaltemittel oben und unten in geschlossener Position
c) Blister im Magazin über oberem Freigabemittel (n=x; beliebig viele)
d) Blister im Magazin zwischen oberem und unterem Freigabemittel (n=y)
e) (1-2 oder) keine Blister im Bürstenbereich
f) Saugluft aus
g) Separierluft aus

### 2. Schritt:

a) wie 1a)
b₁) Freigabemittel oben geschlossen/Rückhalteposition
b₂) Freigabemittel unten in offener Position/Freigabeposition
c) Blister im Magazin über oberem Freigabemittel (n=x)
d) Blister im Magazin unter oberem Freigabemittel (n=y)
e) n=y Blister lasten alle auf Greifmittel
f) Saugluft an (unterster Blister wird angesaugt)
g) Separierluft aus

### 3. Schritt:

a) wie 2a)
b₁) wie 2b₁)
b₂) Freigabemittel unten geschlossen; Messer (unten) greifen so in Stapel ein, dass maximal 1-3 Blister unterhalb des Messers im Bürstenbereich zu liegen kommen
c) wie 2c) (n=x)
d) n=y-1 (2 oder 3)
e) 1-3 Blister im Bürstenbereich (n=z)
f) Saugluft an
g) Separierluft aus

### 4. Schritt:

a) Greifmittel fährt nach unten
b₁) wie 3b₁)
b₂) wie 3b₂)
c) wie 3c)
d) wie 3d)
e) z-1 im Bürstenbereich; nur unterster Blister wird abgezogen; restliche Blister werden von Bürsten zurückgehalten
f) Saugluft an
g) Separierluft an; wird kurz vor der Abwärtsbewegung des Greifmittels eingeschaltet; für ca. obere 10mm des Abwärtsweges des Greifmittels, dann wird abgestellt

### 5. Schritt:

a) Greifmittel in unterer Übergabe/Abgabeposition
b₁) Freigabemittel oben geöffnet/Freigabeposition
b₂) wie 4b₂)
c) n=x-1 (2 oder 3)
d) n=y
e) wie 4e)
f) Saugluft aus
g) Separierluft aus

### 6. Schritt:

a) Greifmittel fährt nach oben
b₁) Freigabemittel oben geschlossen
b₂) wie 5b₂)
c) wie 5c)
d) wie 5d)
e) Anzahl der Blister im Bürstenbereich n wie im Schritt 5; schrägstehende Blister im Bürstenbereich werden von Aufwärtsbewegung des Greifmittels ausgerichtet
f) Saugluft aus
g) Separierluft aus

### 7. Schritt: wie 1. Schritt

Das oben beschriebene Abstapelverfahren kann in einigen Punkten variiert werden. So kann zum Beispiel das Öffnen der oberen Freigabemittel im Prinzip zu jedem Zeitpunkt erfolgen, in dem die unteren Freigabemittel geschlossen sind.

In den Figuren 6a bis 6d ist eine weitere vorteilhafte Ausführungsform der vorliegenden Erfindung dargestellt. Um die Nachfüllintervalle möglichst lange gestalten zu können, ist ein hohes Magazin von Vorteil. Wird ein solches hohes Magazin mit entsprechend vielen Blistern gefüllt, so werden die untersten Blister durch das Gewicht des darüberliegenden Blisterstapels relativ stark ineinander gepresst und lassen sich nur schwer abstapeln. Um eine möglichst hohe Taktfrequenz beim Abstapeln zu erreichen und um Fehlfunktionen zu vermeiden, hat es sich daher als vorteilhaft erwiesen die oberen Rückhaltemittel nicht nur horizontal hin- und herbeweglich, sondern auch vertikal beweglich zu gestalten. Diese vertikale Beweglichkeit wird dadurch erreicht, dass in bereits beschriebener Weise horizontal bewegliche Messer 411 in einem vertikal beweglichen Schlitten 410 gelagert sind. Mittels solcher oberer Rückhaltemittel kann der Blisterstapel nicht nur gehalten, sonder auch leicht angehoben werden. Nach dem Schliessen der oberen Freigabemittel (analog zum oben beschriebenen Schritt 6) Fährt der Schlitten 410 eine kurze Strecke nach oben. Dadurch wird der darüberliegende Blisterstapel angehoben und der, zwischen oberem und unterem Rückhaltemittel liegende, Blisterstapel deutlich entlastet und sogar etwas auseinandergezogen. Die auf diese Weise vorseparierten Blister lassen sich anschliessend wesentlich einfacher abstapeln, so dass es zu weniger Fehlfunktionen kommt, und die Abstapelgeschwindigkeit erhöht werden kann.

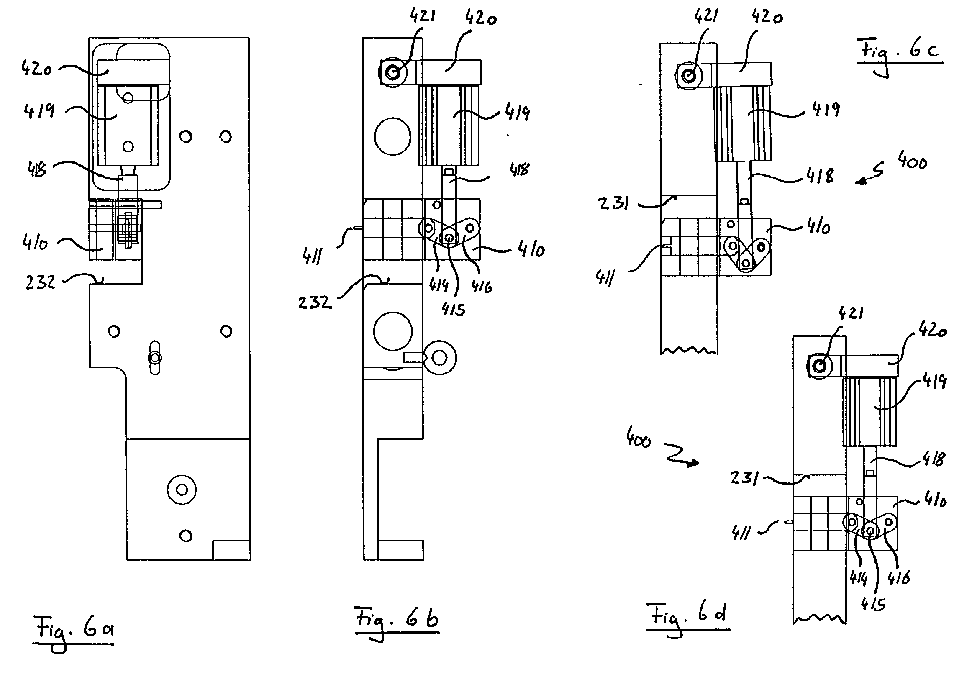

Um die Konstruktion trotz der zusätzlichen Bewegung möglichst einfach zu halten wird wie in der Figur 6 vorgeschlagen ein Antrieb mit einen einzigen Motor pro Klinge vorgeschlagen. Ein Kniehebelsystem erlaubt es die lineare Bewegung eines doppelwirkenden Schubzylinders 419 in eine Auf- und Abbewegung des Schlittens 410 und eine Hin- und Herbewegung der Klinge 411 umzusetzen. Der Schubzylinder 419 wird vorzugsweise pneumatisch oder elektromechanisch betrieben. Er ist mittels einer Platte 420 direkt oder indirekt schwenkbeweglich an den jeweiligen Winkelprofilen 21 bis 24 oder den Streben 25, 26 angeordnet. Ein vom Zylinder 419 angetriebener Stössel 418 greift an einem Kniegelenk 415 an, welches Hebel 414 und 416 an jeweils einem einander zugewandten Ende miteinander verbindet. Die einander entgegengesetzten Enden der Hebel 414 und 416 sind in etwa der selben Ebene am Schlitten 410 respektive an einem Hinteren Ende der Klinge 411 schwenkbar befestigt. Der Stössel 418 ist vom Zylinder 419 in drei Positionen bringbar. Eine erste obere Position, in der der Stössel in den Zylinder zurückgezogen ist, und durch das Zusammenwirken der Kniehebel 414, 416 der Schlitten 410 angehoben und die Klinge 411 in die Rückhalteposition vorgeschoben ist, zeigen die Figuren 6a und 6b. Ist der Stössel 418, wie in der Figur 6c gezeigt maximal ausgefahren, so befindet sich der Schlitten 410 in einer unteren Position und die Klinge 411 ist zurückgezogen in der Freihalteposition. Der Weg des Schlittens ist nach Oben und nach unten durch entsprechende obere 231 und untere 232 Anschlagflächen in der Vertikalstrebe 23 begrenzt. In der Figur 6d ist eine mittlere Position des Stössels 418 gezeigt, bei welcher der Schlitten schon in der unteren Anlageposition, die Klinge 411 aber noch in Rückhaltestellung ist. Die Klinge 411 wird von einem nicht dargestellten Federelement in dieser Rückhaltepositon gehalten. Erst wenn der Stössel 418 noch weiter nach unten gedrückt wird, wird die Klinge 411 entgegen die Kraft der Feder in die Freigabestellung gezogen.

Die Federkraftbeaufschlagung stellt sicher, dass bei einem Ausfall des Zylinders 419, zum Beispiel bei einem Druckluft oder Stromunterbruch, der Schlitten zwar nach unten sinken kann, die Klingen aber den Blisterstapel auf keinen Fall freigeben. Die unteren Freigabemittel 51, 52 sind dadurch auch bei einem Unterbruch sicher entlastet und ein Druchbrechen des Blisterstapels wird zuverlässig verhindert.

Bei Blisterstapeln minderer Qualität, oder bei Stapeln deren Blister besonders fest aneinander und/oder ineinander haften kann es vorkommen, dass beim Hochfahren von Schlitten 410 der, zwischen oberem und unterem Rückhaltemittel liegende, Blisterstapel komplett mit nach oben gezogen wird. Im schlimmsten Fall können sogar Blister, welche bereits unterhalb der unteren Rückhaltemittel im Bürstenbereich liegen über die unteren Messer hinweg nach oben gerissen werden. In einer weiteren vorteilhaften Ausführungsform der erfindungsgemässen Blisterabstapelvorrichtung ist daher ein Vorsepariermittel vorgesehen. Es umfasst mindestens eine zusätzliche Separierluftdüse zum Vorseparieren des Blisterstapels, welche etwa 8 bis 10 mm unterhalb der oberen Rückhaltemittel plaziert ist. Die mindestens eine Vorseparierdüse entspricht im Aufbau vorzugsweise den oben bereits beschriebenen Separierluftdüsen. Sie wird vorzugsweise synchron mit den weiter unten liegenden Separierluftdüsen eingesetzt, so dass keine zusätzlichen Steuermittel oder Steuerschritte nötig sind. In einer bevorzugten Ausführungsform lässt sich die Luftzuleitung zu den oberen Vorseparierdüsen, zum Beispiel mittels eines Hahns, unterbrechen, so dass für die Vorseparierung nur dann Luft eingesetzt wird, wenn dies die abzustapelnden Blister erfordern.

In einer Vorrichtung gemäss der Figur 3 würden die Vorseparierdüsen also etwa 8 bis 10 mm unterhalb der oberen Rückhaltemittel 40 vorzugsweise direkt über der Düsenplatte 61 angebracht. Analog zur Darstellung in der Figur 5d für die Separiermittel 6 werden die Vorseparierdüsen zeitgleich mit den Separierluftdüsen 62-65 während des Verfahrensschritts 4 aktiviert. Falls sich beim Hochfahren von Schlitten 410 der, zwischen oberem und unterem Rückhaltemittel liegende, Blisterstapel nicht vom oberhalb des oberen Rückhaltemittel liegenden Blisterstapel trennt, so werden die direkt unter der Klinge 411 liegenden Blister durch die Druckluft aus der mindestens einen Vorseparierdüse getrennt und die Blister können nach unten auf die geschlossenen unteren Rückhaltemittel fallen.

Wie bereits oben beschrieben ist es wichtig für die einwandfreie Funktion der Rückhaltemittel, dass die Klingen synchron in eine Freigabe- respektive in eine Rückhalteposition gebracht werden können.

Das oben beschriebene Verfahren wird mit einer Vorrichtung durchgeführt, deren untere Freigabemittel 5 die oben bereits mehrfach beschriebene Kombination von starren Rückhaltemitteln, zum Beispiel in Form der Messer 50, 500, und flexiblen Rückhaltemitteln, in Form von Bürsten 52, 520, umfassen. Die Rückhaltemittel können dabei auf einem gemeinsamen Träger 53, 530 oder getrennt voneinander montiert sein.

An Stelle der Bürsten mit einem Saum flexibler Borsten kann als flexibles Rückhaltemittel zum Beispiel auch ein flexibler Schaumkunststoffkörper dienen.

Die Höhe des Magazins kann in Abhängigkeit von der Nachfüllzeit gewählt werden.

Bekannte Stausensoren und/oder Abtaster für Nachfüllmeldungen vom Magazin können zusätzlich an der Vorrichtung angebracht werden.

## Patentansprüche

1. Abstapelvorrichtung/Separiervorrichtung (1), umfassend
- ein Magazin (2) zur Aufnahme einer Vielzahl ineinander gestapelter Konfektionen oder Blister (B)
- ein Greifmittel (3) zum Greifen und Abstapeln der ineinander gestapelten Konfektionen oder Blister (B)
- eine Mehrzahl oberer Rückhaltemittel (4), welche im Bereich des Magazins angeordnet sind zum Zurückhalten eines oberen Teils eines darin befindlichen Blisterstapels
- eine Mehrzahl unterer Rückhaltemittel (5), welche beabstandet von den oberen Rückhaltemitteln (4) am unteren Ende des Magazins (2) in einem Übernahmebereich angeordnet sind,
**dadurch gekennzeichnet, dass**
die unteren Rückhaltemittel (5) jeweils mindestens ein starres Rückhalteelement (50, 500) und ein in Abstapelrichtung unterhalb des starren Rückhalteelements (50, 500) angeordnetes flexibles Rückhalteelement (52, 520) umfassen, wobei zumindest das starre Rückhalteelement (50, 500) zwischen einer Rückhaltestellung und einer Freigabestellung beweglich direkt oder indirekt am Magazin (2) angeordnet ist.

2. Abstapelvorrichtung (1) nach Anspruch 1, **dadurch gekennzeichnet, dass** die unteren Rückhaltemittel (5) schwenkbeweglich an Winkelprofilen (21 - 24) des Magazins (2) angeordnet sind, wobei die Schwenkachse vertikal und damit parallel zum abzustapelnden Blisterstapel verläuft.

3. Abstapelvorrichtung (1) nach Anspruch 1, **dadurch gekennzeichnet, dass** die unteren Rückhaltemittel (5) schwenkbeweglich an Winkelprofilen (21 - 24) des Magazins (2) angeordnet sind, wobei die Schwenkachse horizontal und damit parallel zum Rand (R) der abzustapelnden Blister verläuft.

4. Abstapelvorrichtung (1) nach Anspruch 1, **dadurch gekennzeichnet, dass** die unteren Rückhaltemittel (5) in einer horizontalen Ebene hin- und herbeweglich an Winkelprofilen (21 - 24) des Magazins (2) angeordnet sind.

5. Abstapelvorrichtung (1) nach Anspruch 1, **dadurch gekennzeichnet, dass** die unteren Rückhaltemittel (5) jeweils mindestens ein Messer (50, 500) mit mindestens einer starren Klinge (51, 510-517) und eine unterhalb der mindestens einen Klinge (51, 510-517) angeordnete flexible Bürste (52, 520) umfassen, wobei Messer und Bürste an einem Halter (53, 530) lösbar befestigbar sind.

6. Abstapelvorrichtung (1) nach Anspruch 1, **dadurch gekennzeichnet, dass** die unteren Rückhaltemittel (5) jeweils mindestens ein Messer (50, 500) mit mindestens einer starre Klinge (51, 510-517) und eine unterhalb der mindestens einen Klinge (51, 510-517) angeordnete flexible Bürste (52, 520) umfassen, wobei Messer (50, 500) und Bürste (52, 520) beabstandet voneinander am Magazin (2) angebracht sind, und wobei die Bürsten (52, 520) zwischen einer Rückhaltestellung und einer Freigabestellung beweglich oder unbeweglich befestigt sind.

7. Abstapelvorrichtung (1) nach Anspruch 1, **dadurch gekennzeichnet, dass** Separiermittel (6) im Bereich der unteren Rückhaltemittel (5) am unteren Ende des Magazins (2) in einem Übernahmebereich angeordnet sind.

8. Abstapelvorrichtung (1) nach Anspruch 7, **dadurch gekennzeichnet, dass** die Separiermittel (6) mindestens eine Separierluftdüse (62 - 65) zum Einblasen von Separierluft in den Blisterstapel im oberen Bürstenbereich (52, 520) umfasst.

9. Abstapelvorrichtung (1) nach Anspruch 8, **dadurch gekennzeichnet, dass** die Separiermittel (6)
i) eine Mehrzahl von Separierluftdüsen (62 - 65) umfasst, wobei die Mehrzahl von Düsen in mindestens zwei horizontalen Ebenen in Abstapelrichtung untereinander angeordnet sind, oder
ii) mindestens eine länglich schlitzförmige Düse (66) umfasst, welche vertikal in Abstapelrichtung angeordnet ist.

10. Abstapelvorrichtung (1) nach Anspruch 9, **dadurch gekennzeichnet, dass** ein Paar obere Separierluftdüsen (62, 65) zwischen 5 und 15, vorzugsweise zwischen 8 und 10 mm über einem Paar unterer Separierluftdüsen (63, 64) angeordnet sind, oder dass eine schlitzförmige Separierluftdüse (66) zwischen 5 und 15, vorzugsweise zwischen 8 und 10 mm lang ist.

11. Abstapelvorrichtung (1) nach einem der vorhergehenden Ansprüche, **dadurch gekennzeichnet, dass** Vorsepariermittel im Bereich der oberen Rückhaltemittel (4, 400) am Magazin (2) angeordnet sind, wobei die Vorsepariermittel
i) eine Mehrzahl von Vorseparierdüsen umfassen, wobei die Mehrzahl von Düsen in mindestens zwei horizontalen Ebenen in Abstapelrichtung untereinander angeordnet sind, oder
ii) mindestens eine länglich schlitzförmige Vorseparierdüse umfassen, welche vertikal in Abstapelrichtung angeordnet ist.

12. Abstapelvorrichtung (1) nach Anspruch 11, **dadurch gekennzeichnet, dass** die Vorseparierdüsen 8 bis 10 mm unterhalb der Klingen (41) oder unterhalb der oberen Rückhalteposition der Klingen (411) angeordnet sind.

13. Abstapelvorrichtung (1) nach Anspruch 1, **dadurch gekennzeichnet, dass** die oberen Rückhaltemittel (400) Klingen (411) umfassen, welche horizontal hin- und herbeweglich und vertikal auf- und abbeweglich ausgebildet sind, wobei sie mittels der Horizontalbewegung in eine Rückhalteposition bringbar sind und mittels der Vertikalbewegung der Blisterstapel anhebbar ist.

14. Abstapelvorrichtung (1) nach Anspruch 13, **dadurch gekennzeichnet, dass** mittels eines doppelwirkenden Schubzylinders (419) ein vertikal beweglicher Schlitten (410) auf- und abbewegbar ist und eine am Schlitten (410) angebrachte horizontal bewegliche Klinge (411) hin- und herbewegbar ist.

15. Abstapelvorrichtung (1) nach Anspruch 14, **dadurch gekennzeichnet, dass** der doppelwirkende Schubzylinder (419) einen linear beweglichen Stössel (418) antreibt, welcher an einem Kniegelenk (415) angreift, welches zwei Hebel (414) und (416) an jeweils einem einander zugewandten Ende miteinander verbindet, wobei einander entgegengesetzte Enden der Hebel (414) und (416) in etwa der selben Ebene am Schlitten (410) respektive an einem hinteren Ende der Klinge (411) angreifen.

16. Abstapelvorrichtung (1) nach Anspruch 14, **dadurch gekennzeichnet, dass** der Stössel (418) vom Zylinder (419) in drei Positionen bringbar ist:
eine erste obere Position, in der der Stössel (418) in den Zylinder zurückgezogen ist, und durch das Zusammenwirken der Kniehebel (414, 416) der Schlitten (410) bis zum Anliegen an eine obere Anschlagfläche (231) angehoben und die Klinge (411) in die Rückhalteposition vorgeschoben ist;
eine mittlere Position, in der der Stössel (418)so weit ausgefahren ist, dass der Schlitten (410) auf einer unteren Anschlagfläche (232) anliegt, die Klinge (411) aber noch in Rückhaltestellung ist; und
eine maximal ausgefahrene Position, in der die Klinge (411) entgegen der Kraft einer Feder in die Freihalteposition zurückgezogen ist.

17. Abstapelvorrichtung (1) nach Anspruch 1, **dadurch gekennzeichnet, dass** das Greifmittel (3) in eine obere Übernahme- oder Abnahmepostion bringbar ist, in der vertikale Abstand zwischen einer Unterseite des starren Rückhalteelements (50, 500) und einer mit Saugnäpfen (33) versehenen Tragplatte (34) des Greifmittels (3) grösser ist als die Höhe eines abzustapelnden Blisters (B).

18. Abstapelvorrichtung (1) nach Anspruch 1, **dadurch gekennzeichnet, dass** das Magazin (2) zur Aufnahme von annähernd rechteckigen Blistern (B) vier zur Anpassung auf die Blistergrösse und Form relativ zueinander verschiebbare und arretierbare Winkelprofile (21 - 24) umfasst.

19. Verfahren zum Abstapeln von ineinandergestapelten Blistern (B) mit einer Vorrichtung gemäss der Ansprüche 1 bis 18, umfassend folgende Schritte:
- - bei geschlossenen oberen (4) und unteren (5) Rückhaltemitteln wird Greifmittel (3) in eine obere Abnahmeposition bewegt,
- - die unteren Rückhaltemittel (5) werden geöffnet so dass im Magazinbereich zwischen oberem und unterem Freigabemittel befindlichen Blister nach unten rutschen, bis ein unterster Blister (B1) auf einer Tragplatte (34) des Greifmittels in einer eine obere Abnahmeposition zu liegen kommt,
- die unteren Rückhaltemittel (5) werden geschlossen, so dass sich mindestens der unterste Blister (B₁) in einem Bürstenbereich unterhalb der unteren Freigabemittel (5) befindet und dieser unterste Blister (B₁) saugend an der Tragplatte (34) gehalten wird,
- - das Greifmittel (3) wird nach unten bewegt, und Separierluft wird zwischen den untersten Blister (B₁) und den darüberliegenden Blister eingeblasen,
- der unterste Blister (B₁) wird in einer unteren Abgabestellung des Greifmittels (3) abgegeben,
- die oberen Rückhaltemittel (4) werden geöffnet, und die über dem oberem Freigabemittel (4) befindlichen Blister rutschen nach unten und füllen den über dem unteren geschlossenen Freigabemittel (5) befindlichen Teil des Blisterstapels auf.

20. Verfahren nach Anspruch 19, **dadurch gekennzeichnet, dass** die Separierluft für 5 bis 15, vorzugsweise 8 bis 10 mm des Weges des Greifmittels aus der oberen Übernahmestellung eingeblasen wird.

21. Verfahren nach Anspruch 20, **dadurch gekennzeichnet, dass** die Separierluft während des Abziehens des untersten Blisters (B₁) zwischen den untersten Blisters (B₁) und einen im Blisterstapel nächsthöheren Blister eingeblasen wird.

22. Verfahren nach Anspruch 19, **dadurch gekennzeichnet, dass** die unteren Freigabemittel (5) in der geschlossenen oder Rückhalteposition mit den Messern (50, 500) unter den Rand (R) eines oberhalb eines untersten Blisters (B₁) liegenden Blisters eingreifen und die Bürsten (52, 520) in den Randbereich (R) zumindest des untersten Blisters (B₁) eingreifen, so dass dieser unterste Blister (B₁) gegen die Haltekraft der Bürsten (52, 520) zerstörungsfrei nach unten weggezogen werden kann.
